# FASCICULE DE BREVET EUROPEEN

(11) **EP 2 091 343 B1**
(45) Date de publication et mention de la délivrance du brevet: **16.02.2011**
(21) Numéro de dépôt: 07822640.4
(22) Date de dépôt: 15.11.2007
(51) Int. Cl.: A23D 7/005, A23L 1/064, A23L 1/212, A23G 1/48

(54) **FOURRAGE GRAS OU PATE A TARTINER AUX FRUITS**
FETTFÜLLUNG ODER AUFSTRICH AUF FRUCHTBASIS
FATTY STUFFING OR FRUIT-BASED SPREAD

(30) Priorité: 16.11.2006 FR 0610025
(43) Date de publication de la demande: 26.08.2009
(73) Titulaire: Compagnie Gervais Danone, 75009 Paris (FR)
(72) Inventeur: RABAULT, Jean-Luc, 91650 Breuillet (FR); LAMBERT, Flavien, 92140 Clamart (FR)
(74) Mandataire: Warcoin, Jacques
(86) Numéro de dépôt international: PCT/EP2007/062402
(87) Numéro de publication internationale: WO 2008/059021

(56) Documents cités:
- EP-A1- 0 547 658
- WO-A-85/02757
- DE-U1- 20 111 332
- FR-A- 2 687 547
- FR-A1- 2 209 517
- US-A- 5 260 083
- US-A1- 2003 124 227
- US-A1- 2006 134 307

## Description

La présente invention concerne des fourrages gras ou pâtes à tartiner aromatisés aux fruits, c'est à dire ayant un goût et une couleur de fruits "naturels", peu collants (à la différence des confitures), tout en ayant une bonne composition nutritionnelle et une teneur en équivalent fruit importante.

Des fourrages aqueux contenant des fruits sont connus:
- dans les tablettes de chocolat : la phase aqueuse se reconnaît notamment à la présence de conservateur (sorbate de potassium), et/ou à la forte teneur en sucres pour abaisser l'Aw et/ou à une forte acidité (ces 3 caractéristiques assurant la conservation). Ces fourrages ont aussi l'inconvénient d'être très collants, notamment en cas de casse / fuite de la tablette, dans les doigts (il faut se laver les mains ensuite).
- dans les biscuits sandwichés type BN fraise, qui utilisent de la pulpe de fraise donnant un fourrage collant et qui contient beaucoup de sucres, et/ou des polyols (pour abaisser l'Aw) et dont la teneur en équivalent fruits est faible.

Le document US 2006/134307 par exemple décrit une composition à base de fruits, pouvant être utilisée comme fourrage ou pâte à tartiner, utilisant des fruits sous forme de pépites, ou de petits morceaux de moins de 1 cm².

Des fourrages alcoolisés aromatisés aux fruits sont également connus. Mais le goût n'est ni naturel, ni sain pour les enfants, et l'intérieur étant liquide, le produit est aussi très collant en cas de fuite, et pas facile à manger autrement qu'en bouchées.

La poudre de fruits semble être un bon candidat pour aromatiser et colorer les fourrages gras et pâtes à tartiner, à condition qu'elle n'apporte que très peu d'eau. Toutefois, même secs, les fruits peuvent poser le problème suivant :
- Augmentation de la viscosité et de la limite d'écoulement, notamment lié au fait que les fruits se réduisent en une poudre très fine lors du procédé et au fait que la poudre de fruits est très hygroscopique.

Or les inventeurs ont découvert de façon surprenante qu'il est possible d'aromatiser des fourrages gras ou pâtes à tartiner en utilisant des poudres de fruits « naturels » associées à des poudres de lait et/ou de dérivés laitiers et/ou à de l'amidon sec tout en conférant au fourrage gras ou pâte à tartiner la couleur naturelle des fruits, en conservant de bonnes propriétés nutritionnelles au fourrage gras ou pâtes à tartiner (pas trop de sucre ou de matière grasse, pas d'additifs artificiels tels que arôme ou colorant), en évitant qu'il soit trop collant ou trop liquide et en utilisant un procédé de fabrication très simple, c'est à dire sans les problèmes de l'art antérieur.

La présente invention concerne donc un fourrage gras ou pâte à tartiner aux fruits constitué d'une suspension de particules solides dans une phase grasse continue, comprenant au moins un agent sucrant en une teneur inférieure à 45 % en poids par rapport au poids total du fourrage gras ou de la pâte à tartiner, moins de 3 % en poids de cacao sec non gras par rapport au poids total du fourrage gras ou de la pâte à tartiner, avantageusement moins de 1 % en poids par rapport au poids total du fourrage gras ou de la pâte à tartiner, et ayant une teneur en matière grasse comprise entre 23 et 38 % en poids par rapport au poids total du fourrage gras ou de la pâte à tartiner et, caractérisé en ce qu'il contient de la poudre de lait et/ou de dérivés laitiers et/ou de l'amidon sec et entre 3 et 20 % en poids d'une poudre de fruits par rapport au poids total du fourrage gras ou de la pâte à tartiner, la poudre de fruits ayant un D₉₀ inférieur à 500 µm, et une teneur en eau inférieure à 8 % en poids par rapport au poids total de la poudre de fruits, la teneur en (poudre de lait + poudre de dérivés laitiers + amidon sec) étant supérieure à 25 % en poids.

Au sens de la présente invention, on entend par « fourrage gras ou pâte à tartiner » toute suspension concentrée de particules solides dans une phase grasse continue qui n'est pas une émulsion eau dans huile. Les compositions sont proches du chocolat et analogues, mais s'en distinguent principalement par la nature des matières grasses, plus molles : la SFC_{20-°C} (Solid Fat Content mesuré à 20°C) est inférieure à 50%, d'où une texture en général non croquante à 20°C. Des exemples typiques de matières grasses utilisables dans les fourrages gras selon l'invention sont les mélanges 70% d'huile de palme et 30% de palmiste hydrogéné (31°C de point de fusion), 50% d'huile de palme et 50% coprah hydrogéné (30°C de point de fusion), MGLA (matière grasse laitière anhydre) et huile de colza ou MGLA et huile de noisette. Les fourrages gras sont généralement utilisés en "intérieur" (soit complètement inclus dans une coque en chocolat, un gâteau ou dans un biscuit, soit partiellement inclus (tartelette, biscuit sandwiché...). Les pâtes à tartiner grasses ont une texture de pommade / pâte à tartiner dont la consistance peut être plus ou moins visqueuse.

Dans le reste de la demande, le terme « fourrages gras » englobe les fourrages gras et les pâtes à tartiner, sauf spécifié autrement.

Avantageusement la teneur en matière grasse du fourrage gras selon la présente invention est comprise entre 23 et 35% en poids par rapport au poids total du fourrage gras, de façon avantageuse entre 23 et 33% en poids par rapport au poids total du fourrage gras, de façon encore plus avantageuse entre 26 et 30% en poids par rapport au poids total du fourrage gras.

Au sens de la présente invention on entend par « agent sucrant », tout sucre (mono et disaccharides), sirops de glucose et / ou fructose, maltodextrines, polyols et édulcorants intenses. Parmi les monosaccharides on cite le fructose, le galactose, le glucose. Parmi les disaccharides, on cite notamment le saccharose qui est le sucre couramment utilisé pour la réalisation de fourrages gras, mais le saccharose peut être remplacé partiellement ou totalement par un autre disaccharide tel que le lactose, par exemple à hauteur de 0 à 50% en poids, ou par des polyols tels que par exemple le mannitol et le maltitol. La variante préférée est cependant le saccharose.

Avantageusement, la quantité d'agent sucrant du fourrage gras selon la présente invention est compris entre 10 et 45% en poids par rapport au poids total du fourrage gras, plus avantageusement entre 20 et 40% en poids par rapport au poids total du fourrage gras, encore plus avantageusement entre 20 et 33 % en poids par rapport au poids total du fourrage gras.

Au sens de la présente invention on entend par « fruit », tout fruit « naturel » hors fruits à coque (noix, noisettes, amandes, cajou, pécan...). Sont exclus les fruits confits. Il s'agit par exemple de fruits rouges tels que fraise, framboise, myrtille ou mures, de fruits exotiques tels que ananas, mangue ou kiwi, de melon, de pêche, d'abricot, de banane, de cerises, de pommes, de poires, d'agrumes tels que orange, citron, pamplemousse ou clémentine, de raisin, de prunes, de mirabelles, de figues. Avantageusement, il s'agit de fruits rouges.

Au sens de la présente invention on entend par « poudre de fruits » tout fruit tel que défini ci-dessus, séché et réduit en poudre et dont la teneur en eau est inférieure à 8 % en poids par rapport au poids total de la poudre de fruits, de façon avantageuse inférieure à 5% en poids par rapport au poids total de la poudre de fruits, de façon encore plus avantageuse inférieure à 3,5% en poids par rapport au poids total de la poudre de fruits, encore plus avantageusement inférieure à 2% en poids par rapport au poids total de la poudre de fruits. La poudre de fruits se distingue des morceaux de fruits par une granulométrie plus fine. Ainsi son D₉₀ est < 500µm, avantageusement < 250µm, de façon avantageuse < 120 µm, de façon encore plus avantageuse < 60µm. Sont aussi exclues les purées de fruits, car elles contiennent une teneur en eau >8% en poids.

Bien évidement, la poudre de fruits peut être obtenue par séchage de la totalité de la partie comestible, ou par séchage d'une partie seulement de la partie commestible, par exemple le jus ou la pulpe (résidu après extraction du jus). Avantageusement, l'invention utilisera la totalité de la partie comestible.

Le D₉₀ est le diamètre en dessous duquel se trouvent 90% du volume de toutes les particules d'une poudre.

Avantageusement la poudre de fruits est totalement déshydratée. De façon avantageuse, les fruits de la poudre se trouvent sous une forme lyophilisée ce qui donne une note aromatique et une couleur plus fortes et plus naturelles au produit final.

De façon avantageuse, la quantité de poudre de fruits du fourrage gras selon la présente invention est comprise entre 5 et 15% en poids par rapport au poids total du fourrage gras, avantageusement entre 8 et 15% en poids par rapport au poids total du fourrage gras.

Au sens de la présente invention on entend par «Equivalent fruits » la matière sèche (MS) du fruit mise en oeuvre / MS du fruit à l'état naturel.

Par exemple : la fraise naturelle a 10% de MS et 90% d'eau. Employer 5,15% d'une poudre de fraise à 3% d'eau, c'est-à-dire ayant 97% de MS de fruits dans un produit fini donne un équivalent fruits de 97/10*5,15% = 50%.

Ainsi avantageusement le fourrage gras selon la présente invention contient un équivalent fruit supérieur à 30%, de façon avantageuse supérieur à 50%, et même supérieur à 100%.

La teneur en cacao sec non gras faible ou nulle du fourrage gras selon la présente invention permet d'éviter la coloration du fourrage gras en marron afin que ce dernier puisse être uniquement coloré par la présence de la poudre de fruits. Le fourrage gras selon la présente invention a ainsi la couleur « naturelle » du fruit qui le parfume.

De façon avantageuse, l'Aw du fourrage gras selon la présente invention est inférieure à 0,60, avantageusement inférieure à 0,50, de façon avantageuse inférieure à 0,35.

L'activité de l'eau d'un produit est une notion qui est bien connue dans le domaine alimentaire, cette grandeur, en abrégé Aw, mesure la disponibilité de l'eau dans un échantillon. Dans la plupart des cas, cette activité de l'eau n'est pas proportionnelle à la teneur en eau du produit.

Les méthodes permettant la mesure de l'Aw d'un produit sont connues de l'homme du métier. Pour les fourrages gras, qui sont assez imperméables à l'eau, la méthode de mesure selon l'invention consiste à exposer la plus grande surface possible à l'air (par exemple en émiettant les fourrages solides) et à mesurer l'Aw à 25 +/-2°C au Novasina^{™}, appareil qui laisse assez de temps (24h) pour l'équilibrage de l'eau entre l'échantillon et l'air.

Le fourrage gras selon la présente invention contient de l'amidon sec et/ou des dérivés laitiers en poudre et/ou du lait en poudre, la teneur en (poudre de lait + poudre de dérivés laitiers + amidon sec) étant supérieure à 25 % en poids par rapport au poids total du fourrage gras. Avantageusement la teneur en (poudre de laits + poudre de dérivés laitiers + amidon sec) du fourrage gras selon l'invention est supérieure à 30 % en poids par rapport au poids total du fourrage gras, avantageusement supérieure à 35% en poids par rapport au poids total du fourrage gras, de façon avantageuse supérieure à 40 % en poids par rapport au poids total du fourrage gras.

Ces teneurs permettent pour des raisons nutritionnelles de diminuer les quantités d'agent sucrant du fourrage gras selon l'invention tout en assurant la fonction "agent de charge" qu'assurent généralement les sucres.

Par ailleurs, il n'est pas évident d'augmenter fortement la teneur en protéines de lait dans le fourrage gras, notamment à cause d'une augmentation de viscosité / limite d'écoulement pendant le stockage liquide (matière grasse fondue), et ce d'autant plus que la température de stockage est élevée et d'autant plus que la teneur en eau du fourrage gras augmente ou que la teneur en MG diminue. Ceci est bien connu de l'homme de l'art. D'où l'intérêt d'agents de charge comme l'amidon ou les fibres.

Il n'était donc pas évident de combiner à la fois une quantité de poudre de lait importante et une quantité significative de poudre de fruits et/ ou d'amidon. En effet:
- l'amidon apporte une grande quantité d'eau (mais les inventeurs ont découvert que celle-ci est très liée, ce qui explique qu'elle ne pose pas de problème)
- pour préserver intégralement la couleur et l'arôme des fruits, il est préférable de ne pas chauffer le fourrage gras au dessus de 55°C, de préférence au dessus de 45°C, ce qui limite la possibilité d'évaporation de l'eau qui se produit lors du conchage.
- les poudres de fruit et de lait augmentent la viscosité du fourrage gras.

Au sens de la présente invention on entend par « amidon sec » de l'amidon qui ne contient pas d'eau et qui a donc été totalement séché. L'amidon sec selon la présente invention est avantageusement ajouté sous forme d'amidon natif et/ou surséché non gélatinisé, éventuellement thermisé pour abaisser sa charge microbienne.

L'homme de l'art connait différentes techniques pour reconnaitre l'amidon non gélatinisé; la plus simple est l'observation au microscope en lumière polarisée : les grains non gélatinisés apparaissent sous forme de "croix de malte" (bi-réfringence), alors que les grains gélatinisés perdent cette caractéristique.

Il est ainsi possible dans le cadre de la présente invention de remplacer une partie importante des sucres traditionnellement présents dans le fourrage gras par de l'amidon natif ou physiquement modifié sans altérer la saveur sucrée du produit. Cet ajout d'amidon permet aussi de réduire sensiblement la teneur en matières grasses du fourrage gras selon l'invention.

A la différence des sucres, l'amidon n'est pas sucré et ne fond pas en bouche et il est donc surprenant que le fourrage gras selon l'invention, présente des caractéristiques organoleptiques semblables, voire meilleures, que les produits conventionnels.

On peut utiliser tout type d'amidon, et notamment l'amidon de blé, l'amidon de maïs, l'amidon de maïs waxy, l'amidon de tapioca, l'amidon de riz, l'amidon de pomme de terre, ou leurs mélanges.

Avantageusement, on utilise de l'amidon natif, c'est-à-dire non gélatinisé et cet amidon ne sera pas gélatinisé lors du procédé ultérieur. Contrairement aux sirops de glucose, aux maltodextrines et aux protéines, l'amidon natif absorbe très peu la salive dans la bouche et n'augmente donc pas le collant du fourrage gras. De plus, l'amidon natif étant un produit naturel non modifié, il ne fait pas partie des additifs alimentaires, qui doivent être signalés en tant que tels sur l'emballage du produit commercialisé.

En outre, l'amidon natif ne présente pas d'inconvénients digestifs, contrairement aux polyols qui ont un effet laxatif, ce qui est particulièrement indésirable dans des produits qui sont destinés aux enfants. Le fait qu'il soit non cuit rend l'amidon natif lentement digestible, ce qui permet de réduire l'index glycémique du fourrage gras selon la présente invention. Ainsi l'ajout d'amidon natif dans le fourrage gras selon l'invention entraîne comme effet supplémentaire une sensation de satiété prolongée par rapport aux fourrages gras classiques. En outre, la densité de l'amidon natif est élevée et ses granules ne présentent pas une porosité accessible à la matière grasse. Cette absence de porosité accessible est importante afin de ne pas augmenter la viscosité du fourrage gras suite à une inclusion de matière grasse dans les pores.

La granulométrie des granules d'amidons natifs, qui est généralement comprise entre 2 µm et 100 µm, et plus généralement entre 5 µm et 45 µm, est également idéale pour une utilisation dans le fourrage gras selon l'invention. Ainsi les amidons natifs ne comprennent ni trop de particules fines, ni trop de grosses particules. La présence de particules fines augmente la viscosité du fourrage gras et nécessite donc d'augmenter la teneur en matières grasses. A l'inverse, la présence de grosses particules confère au fourrage gras une sensation sableuse dans la bouche. L'équilibre entre granules de petite taille et de grande taille peut, en tant que de besoin, être ajusté en fonction des textures et propriétés recherchées, en mélangeant, en différentes proportions, des amidons de diverses provenances.

Dans un mode de réalisation avantageux, la taille de particules de l'amidon est pour au moins 90% des particules comprise entre 2 µm et 100 µm, de préférence entre 5 µm et 45 µm.

Parmi les amidons natifs, on préfère l'amidon de blé, car il présente une granulométrie idéale de 2 µm à 45 µm, et car c'est un constituant naturel dans les produits de cuisson céréaliers, qui sont principalement à base de farine de blé, d'ailleurs souvent mélangée à de l'amidon de blé.

Les amidons de maïs et de manioc font aussi partie des amidons préférés de par leur granulométrie.

D'autres avantages de l'amidon natif sont sa saveur neutre et sa couleur blanche, ce qui permet au fourrage gras selon la présente invention de prendre le goût et la couleur de la poudre de fruits. Enfin, l'amidon natif est un ingrédient bon marché ; et il peut souvent être employé sans broyage dans le fourrage gras selon l'invention, ce qui permet un procédé de fabrication simplifié et une plus grande productivité.

Outre l'amidon natif, on peut également utiliser conformément à l'invention des amidons surséchés, c'est-à-dire des amidons, non cuits, dont la teneur en humidité a été amenée en dessous de leur humidité relative d'équilibre. On peut également envisager l'utilisation d'un mélange d'amidons natifs et d'amidons surséchés ou de différents types d'amidons surséchés.

L'amidon de blé contient environ 13% d'eau et 87% d'amidon nutriment. Au sens de l'invention, on parle d'amidon sec pour éviter toute confusion, car l'amidon sec = amidon nutriment. On peut donc apporter selon l'invention jusqu'à 40% en poids d'amidon sec, soit une teneur en amidon de blé natif d'environ 46% en poids.

Dans certains fourrages gras selon l'invention, tout ou partie de l'amidon peut être amenée sous forme de farine native non gélatinisée riche en amidon, par exemple une farine de céréale, telle que la farine de blé, de riz, de maïs. La farine de blé peut être assimilée à un mélange de 12 % en poids de protéines, 83 % d'amidon à 13 % d'eau, de 1 % de matières grasses et de 4% de fibres. Eventuellement, cette farine peut être surséchée et/ou elle peut être thermisée (pour abaisser sa charge microbienne). On comprend par une farine thermisée une farine qui a été soumise à un traitement thermique pour abaisser sa charge microbienne, sans que son amidon soit gélatinisé. De préférence, ces farines non gélatinisées sont des farines de céréale.

L'amidon seul est cependant la version préférée par rapport à la version contenant de la farine seule ou de la farine et de l'amidon, car cela donne des produits un peu moins collants en bouche et un peu plus neutres en goût.

Il n'était pas évident de pouvoir utiliser un amidon (ou une farine) non surséché car l'amidon contient de l'eau, généralement de 13% à 20%, ce qui fait que l'introduction, dans une formulation, de 15% d'amidon de blé par exemple (contenant 13% d'eau) apporte environ 2% d'eau dans la formulation. Or, il est bien connu que l'addition d'une telle quantité d'eau directement sous forme libre, ou sous forme d'un miel ou d'un sirop de sucre par exemple, provoque la "solidification" du fourrage gras, et entraîne des risques de saponification en présence de MG lauriques notamment (très souvent utilisées dans les fourrages gras). De façon surprenante et inattendue, aucun de ces problèmes n'est rencontré lors de l'utilisation, conformément à l'invention, d'un amidon ou d'une farine dans le fourrage gras selon l'invention.

Comme indiqué précédemment, l'ajout d'amidon dans le fourrage gras selon l'invention permet en outre de réduire la teneur en sucres et en matières grasses du fourrage gras. Dans un mode de réalisation particulier, le fourrage gras selon la présente invention, contient entre 1 et 40 % en poids d'amidon sec par rapport au poids total du fourrage gras, avantageusement entre 5 et 30 % en poids par rapport au poids total du fourrage gras, de façon avantageuse entre 13 et 22 % en poids par rapport au poids total du fourrage gras.

Au sens de la présente invention, on entend par « dérivés laitiers en poudre » tout produit issus du lait et se présentant sous forme de poudre (exemples non limitatifs : poudre de lait écrémé ou non, lactosérum, lactose, babeurre, caséinates, concentrés de protéines totales ou sériques...). La MGLA apportée seule n'est pas incluse, par contre la MG de lait apportée via une poudre de lait entière est comprise dans cette définition. Par extension, on inclut aussi la matière sèche du lait apporté sous forme liquide et séché au cours du procédé de fabrication du fourrage gras selon la présente invention. Les dérivées laitiers apportent du lactose (sucre), mais aussi des nutriments intéressants comme les protéines et le calcium.

Dans un mode de réalisation avantageux, le fourrage gras selon l'invention contient de la poudre de lait et/ou de dérivés laitiers à une teneur comprise entre 5 et 40 % en poids par rapport au poids total du fourrage gras, avantageusement entre 10 et 35% en poids par rapport au poids total du fourrage gras, de façon avantageuse entre 15 et 30 % en poids par rapport au poids total du fourrage gras.

De façon avantageuse, le fourrage gras selon l'invention contient en outre au moins un émulsifiant, avantageusement choisi parmi la lécithine, le PGPR ou le phosphatide d'ammonium. Dans une certaine plage, la viscosité du fourrage gras est ajustée par la teneur en MG et/ou par l'ajout d'émulsifiants (bien connu de l'homme de l'art). Avantageusement, l'émulsifiant est présent en une quantité < 1% en poids par rapport au poids total du fourrage gras selon l'invention, de façon avantageuse dans le cas du PGPR < 0,5% en poids par rapport au poids total du fourrage gras selon l'invention.

Avantageusement, le fourrage gras selon l'invention contient plus de 120 mg de calcium élément pour 100 g de fourrage gras, avantageusement plus de 400 mg pour 100 g de fourrage gras, encore plus avantageusement plus de 1000 mg pour 100 g de fourrage gras. Le calcium peut provenir de la poudre de lait ou de dérivés laitiers. On peut aussi renforcer le calcium par un concentré de calcium d'origine laitière ou de préférence un calcium non laitier, qui peut être (non exhaustif) : carbonate de calcium ou citrate de calcium en poudres. Dans ce cas, le fourrage gras selon l'invention contient une source de calcium autre que le lait ou les dérivés laitiers.

Dans un mode de réalisation particulier, aucun arôme de fruits autre que celui déjà présent naturellement dans la poudre de fruits, n'est ajouté dans le fourrage gras.

De façon avantageuse, le fourrage gras selon l'invention ne contient pas d'additifs alimentaires autres que les émulsifiants.

De même avantageusement aucun colorant, autre que celui présent naturellement dans la poudre de fruits, n'est ajouté dans le fourrage gras selon la présente invention. Avantageusement, le fourrage gras selon la présente invention ne contient pas de colorant considéré comme additif dans la législation européenne selon la directive 94/36/CE du 30/6/94, et portant un code E.

Avantageusement, la teneur en eau du fourrage gras selon l'invention est inférieure ou égal à 6 % en poids par rapport au poids total du fourrage gras. Avantageusement, le fourrage gras selon l'invention contient moins de 1% en poids par rapport au poids total du fourrage gras d'eau sous forme de gouttelettes, de préférence moins de 0,2 %.

Avantageusement, la teneur en acides gras saturés du fourrage gras selon l'invention est inférieure à 50% en poids, de préférence inférieure à 40% en poids, avantageusement inférieure à 30% en poids, et spécialement inférieure à 20% par rapport au poids total des acides gras.

La présente invention concerne en outre un procédé de fabrication d'un fourrage gras selon l'invention caractérisé en ce que 3 à 20 % de poudre de fruits dont le D₉₀ est inférieur à 500 µm et dont la teneur en eau est inférieure à 8 % en poids est ajoutée au fourrage gras ou à la pâte à tartiner contenant de la matière grasse, un agent sucrant, du lait en poudre et/ou de la poudre de produits laitiers et/ou de l'amidon sec, et éventuellement du cacao sec non gras, la température de mélange et de stockage ne dépassant pas 55°C pendant plus de 30 minutes, avantageusement ne dépassant pas 45°C pendant plus de 30 minutes. De préférence, tout le procédé de fabrication et le stockage sont à moins de 55°C, avantageusement à moins de 45°C. Ceci permet de préserver la couleur et l'arôme des fruits et d'autre part à limiter les agrégats (grumeaux) qu'il faut ensuite tamiser ou rebroyer. Si la poudre de fruits est assez fine, elle est ajoutée après les étapes de broyage des autres ingrédients.

De préférence, la poudre de fruit a une teneur en eau inférieure à 5%, de préférence inférieure à 3,5%, avantageusement inférieure à 2%. Les poudres de fruits étant très hygroscopiques, il convient de prendre les précautions pour éviter leur réhydratation (stockage court après ouverture, humidité relative de l'air réduite...).

Dans un autre procédé avantageux de fabrication du fourrage gras selon la présente invention, des fruits entiers ou de gros morceaux de fruits ayant la teneur en eau de la poudre de fruits selon la présente invention (c'est à dire inférieure à 8% en poids) sont ajoutés dans le fourrage gras puis broyés pendant le procédé de fabrication du fourrage gras selon l'invention de façon à obtenir le D₉₀ désiré. Avantageusement, une partie de la lécithine est ajoutée avant ce broyage.

Avantageusement, dans le cadre des procédés de fabrication selon la présente invention, les fruits utilisés sont sous forme lyophilisée.

La présente invention concerne en outre l'utilisation du fourrage gras aux fruits selon l'invention en tant que fourrage dans des produits de biscuiterie, pâtisseries, barres, confiseries conservés à température ambiante ou réfrigérés.

Au sens de la présente invention, on entend par « produit de biscuiterie » les biscuits secs, les gaufrettes, les biscottes, les crackers, les cookies, les barres céréalières (avec ou sans fruits) etc.

La présente invention concerne enfin l'utilisation de la pâte à tartiner aux fruits selon l'invention sur du pain, des substituts de pain (biscottes et crackers), ou en trempage de sticks biscuités, par exemple des bretzels.

L'exemple suivant illustre l'invention et en particulier le procédé de préparation et les utilisations du fourrage gras selon l'invention.

### EXEMPLE 1 : PATE A TARTINER ET FOURRAGE GRAS AROMATISE A LA FRAISE

On réalise une pâte à tartiner et un fourrage à l'arôme fraise à l'aide des ingrédients rassemblés dans le tableau 1 suivant:

**Tableau 1: liste des ingrédient et proportions (% en poids)**

| **Ingrédients** | **%** |
|---|---|
| Huile de colza non hydrogénée | 19,5 |
| MGLA | 6,5 |
| Lécithine | 0,3 |
| PGPR | 0,05 |
| Sucre glace (Saccharose) | 23,0 |
| Amidon natif de blé non gélatinisé contenant 13% d'eau | 12,15 |
| Fructo Oligo Saccharides | 7 |
| Poudre de lait écrémé (1% d'eau) | 21,0 |
| Fraises lyophilisées en poudre (1,5% d'eau) | 7,5 |
| Carbonate de calcium broyé | 3 |
| Total | 100 |

### Analyse nutritionnelle :

- MG : 26,6%
- Agents sucrants : 38,4 %
   dont sucres ajoutés (non inclus dans les ingrédients non raffinés, comme les fruits et le lait) : 23%
- Amidon sec : 10,6%
- Equivalent fruits : ~ 70%
- Dérivés laitiers en poudre : 21%
- Acides gras saturés : ~22% des AG totaux

Le procédé de fabrication est le suivant:
Mixer les ingrédients à 35°C : d'abord tous les ingrédients sauf la poudre de fruits lyophilisée, puis ajouter progressivement les fruits lorsque la pâte est formée. Le mélange au Kenwood avec un mélangeur de type feuille prend environ 4 min.
   Selon la granulométrie des différentes poudres, la dose de PGPR pourra être ajustée (0 - 0,4%) pour obtenir la limite d'écoulement souhaitée : plus les poudres sont fines, plus il faut de PGPR pour une limite d'écoulement donnée.
Réaliser la dépose sur biscuit (fourrage) ou la mise en pots (pâte à tartiner) à cette même température. Refroidissement et stockage à 18°C.

Ce produit peut être utilisé tel quel comme pâte à tartiner (substitut de Nutella), ou en fourrage dans des barres ou biscuits sandwichés (remplacement du fourrage des goûters fourrés).

Le produit se conserve au moins 3 mois à 18-20°C.

## Revendications

1. Fourrage gras ou pâte à tartiner aux fruits, constitué d'une suspension de particules solides dans une phase grasse continue, comprenant au moins un agent sucrant en une teneur inférieure ou égale à 45 % en poids, moins de 3 % en poids de cacao sec non gras, avantageusement moins de 1% en poids, et ayant une teneur en matière grasse comprise entre 23 et 38 % en poids, **caractérisé en ce qu'**il contient de la poudre de lait et/ou de dérivés laitiers et/ou de l'amidon sec et entre 3 et 20% en poids d'une poudre de fruits, la poudre de fruits ayant un D₉₀ inférieur à 500 µm et une teneur en eau inférieure à 8 % en poids, et la teneur en (poudre de lait + poudre de dérivés laitiers ↑ amidon sec) étant supérieure à 25% en poids.

2. Fourrage gras ou pâte à tartiner aux fruits selon la revendication 1, **caractérisée en ce que** son Aw est intérieure à 0,60, avantageusement inférieure à 0,35.

3. Fourrage gras ou pâte à tartiner aux fruits selon la revendication 1 ou 2, **caractérisé en ce qu'**il contient entre 1 et 40% en poids d'amidon sec, avantageusement entre 13 et 22 % en poids.

4. Fourrage gras ou pâte à tartiner aux fruits selon l'une quelconque des revendications précédentes, **caractérisé en ce que** sa teneur en (poudre de dérivés laitiers + poudre de lait + amidon sec) est supérieure à 30 % en poids, avantageusement supérieure à 40% en poids.

5. Fourrage gras ou pâte à tartiner aux fruits selon l'une quelconque des revendications précédentes, **caractérisé en ce que** sa teneur en agent sucrant est comprise entre 10 et 45 % en poids, avantageusement entre 20 et 33 % en poids.

6. Fourrage gras ou pâte à tartiner aux fruits selon l'une quelconque des revendications précédentes, **caractérisé en ce que** sa teneur en matière grasse est comprise entre 23 et 35% en poids, avantageusement entre 26 et 30 % en poids.

7. Fourrage gras ou pâte à tartiner aux fruits selon l'une quelconque des revendications précédentes, **caractérisé en ce qu'**il contient en outre au moins un émulsifiant, avantageusement choisi parmi la lécithine, le PGPR ou le phosphatide d'ammonium.

8. Fourrage gras ou pâte à tartiner aux fruits selon l'une quelconque des revendications précédente, **caractérisé en ce qu'**il contient plus de 120 mg de calcium élément/100 g de fourrage gras, avantageusement plus de 400 mg pour 100 g de fourrage gras et de préférence plus de 100 mg pour 100 g de fourrage gras.

9. Fourrage gras ou pâte à tartiner aux fruits selon l'une quelconque des revendications précédentes, **caractérisé en ce que** sa teneur en acides gras saturés est inférieure à 50% en poids par rapport an poids total des acides gras.

10. Fourrage gras ou pâte à tartiner aux fruits selon l'une quelconque des revendications précédentes, **caractérisé en ce qu'**il ne contient pas de colorant considéré comme additifs dans la législation européenne.

11. Fourrage ou pâte à tartiner aux fruits selon l'une quelconque des revendications précédentes, **caractérisé en ce que** les fruits de la poudre de fruits sont sous une forme lyophilisée.

12. Procédé de fabrication d'un fourrage gras ou d'une pâte à tartiner aux fruits selon l'une quelconque des revendications précédentes, **caractérisé en ce que** 3 à 20 % de poudre de fruits dont le D₉₀ est inférieur à 500 µm et dont la teneur en eau est inférieure à 8 % en poids est ajoutée au fourrage gras ou à la pâte à tartiner contenant de la matière grasse, un agent sucrant, de la poudre de lait et/ou de la poudre de produits laitiers et/ou de l'amidon, et éventuellement du cacao sec non gras, la température de mélange et de Stockage ne dépassant pas 55°C pendent plus de 30 min, avantageusement ne dépassant pas 45°C pendant plus de 30 min.

13. Procède selon la revendication 12, **caractérisé en ce que** les fruits utilisés sont sous une forme lyophilisée.

14. Utilisation du fourrage gras ou pâte à tartiner aux fruits selon l'une quelconque des revendications 1 à 11 en tant que fourrage dans des produits de biscuiterie, patisseries, barres, confiseries conservés à température ambiante ou réfrigérés ou sur du pain, des substituts de pain, ou en trempage de sticks biscuités.

## Claims

1. Fruit-based fatty stuffing or spread consisting of a suspension of solid particles in a continuous fatty phase, comprising at least one sugaring agent with a content equal to or less than 45% by weight, less than 3% by weight of non-fatty dry cocoa, advantageously less than 1% by weight, and having a fat content comprised between 23 and 38% by weight, **characterized in that** it contains milk and/or dairy derivative powder and/or dry starch and between 3 and 20% by weight of fruit powder, the fruit powder having a D₉₀ of less than 500µm and a water content less than 8% by weight, and the content of (milk powder + dairy derivative powder + dry starch) being above 25% by weight.

2. The fruit-based fatty stuffing or spread according to claim 1, **characterized in that** its Aw is less than 0.60, advantageously less than 0.35.

3. The fruit-based fatty stuffing or spread according to claim 1 or 2, **characterized in that** it contains between 1 and 40% by weight of dry starch, advantageously between 13 and 22% by weight.

4. The fruit-based fatty stuffing or spread according to any of the preceding claims, **characterized in that** its (dairy derivative powder + milk powder + dry starch) content is above 30% by weight, advantageously above 40% by weight.

5. The fruit-based fatty stuffing or spread according to any of the preceding claims, **characterized in that** its sugaring agent content is comprised between 10 and 45% by weight, advantageously between 20 and 33 % by weight.

6. The fruit-based fatty stuffing or spread according to any of the preceding claims, **characterized in that** its fat content is comprised between 23 and 35% by weight, advantageously between 26 and 30% by weight.

7. The fruit-based fatty stuffing or spread according to any of the preceding claims, **characterized in that** it further contains at least one emulsifier, advantageously selected from lecithin, PGPR or ammonium phosphatide.

8. The fruit-based fatty stuffing or spread according to any of the preceding claims, **characterized in that** it contains more than 120 mg of elementary calcium/100g of fatty stuffing, advantageously more than 400mg per 100g of fatty stuffing, and preferably more than 1000mg per 100g of fatty stuffing.

9. The fruit-based fatty stuffing or spread according to any of the preceding claims, **characterized in that** its saturated fatty acid content is less than 50% by weight based on the total weight of the fatty acids.

10. The fruit-based fatty stuffing or spread according to any of the preceding claims, **characterized in that** it does not contain any coloring agent considered as additives in European legislation.

11. The fruit-based stuffing or spread according to any of the preceding claims, **characterized in that** the fruits of the fruit powder are in freeze-dried form.

12. A method for making a fruit-based fatty stuffing or spread according to any of the preceding claims **characterized in that** 3 to 20% of fruit powder, for which D₉₀ is less than 500 µm and for which the water content is less than 8% by weight, is added to the fatty stuffing or spread containing fat, sugaring agent, milk powder and/or dairy product powder and/or starch, and optionally non-fatty dry cocoa, the mixing and storage temperature not exceeding 55°C for more than 30 min, advantageously not exceeding 45°C for more than 30 min.

13. The method according to claim 12, **characterized in that** the fruit used is in freeze-dried form.

14. The use of the fruit-based fatty stuffing or spread according to any of claims 1 to 11 as stuffing in biscuit products, pastries, bars, candies kept at room temperature or refrigerated, or on bread, bread substitutes, or for dipping biscuit sticks.

## Patentansprüche

1. Fettfüllung oder Aufstrich auf Fruchtbasis, gebildet aus einer Suspension von festen Teilchen in einer kontinuierlichen fetten Phase, umfassend mindestens ein Süßungsmittel in einem Gehalt unter oder gleich 45 Gew.-%, weniger als 3 Gew.-% trockenen nicht-fetten Kakao, in vorteilhafter Weise weniger als 1 Gew.-%, und mit einem Fettgehalt zwischen 23 und 38 Gew.-% eingeschlossen, **dadurch gekennzeichnet, dass** sie bzw. er Milchpulver und/oder Pulver von Molkereiderivaten und/oder trockene Stärke und zwischen 3 und 20 Gew.-% eines Pulvers von Früchten enthält, wobei das Pulver von Früchten einen D₉₀ unter 500 µm und einen Wassergehalt unter 8 Gew.-% aufweist, und wobei der Gehalt an (Milchpulver + Pulver von Molkereiderivaten + trockene Stärke) über 25 Gew.-% beträgt.

2. Fettfüllung oder Aufstrich auf Fruchtbasis nach Anspruch 1, **dadurch gekennzeichnet, dass** ihre bzw. seine Aw unter 0,60, in vorteilhafter Weise unter 0,35 beträgt.

3. Fettfüllung oder Aufstrich auf Fruchtbasis nach Anspruch 1 oder 2, **dadurch gekennzeichnet, dass** sie bzw. er zwischen 1 und 40 Gew.-% trockene Stärke, in vorteilhafter Weise zwischen 13 und 22 Gew.-% enthält.

4. Fettfüllung oder Aufstrich auf Fruchtbasis nach einem der vorangegangenen Ansprüche, **dadurch gekennzeichnet, dass** ihr bzw. sein Gehalt an (Pulver von Molkereiderivaten + Milchpulver + trockene Stärke) über 30 Gew.-%, in vorteilhafter Weise über 40 Gew.-% beträgt.

5. Fettfüllung oder Aufstrich auf Fruchtbasis nach einem der vorangegangenen Ansprüche, **dadurch gekennzeichnet, dass** ihr bzw. sein Gehalt an Süßungsmittel zwischen 10 und 45 Gew.-% eingeschlossen, in vorteilhafter Weise zwischen 20 und 33 Gew.-% liegt.

6. Fettfüllung oder Aufstrich auf Fruchtbasis nach einem der vorangegangenen Ansprüche, **dadurch gekennzeichnet, dass** ihr bzw. sein Gehalt an Fett zwischen 23 und 35 Gew.-% eingeschlossen, in vorteilhafter Weise zwischen 26 und 30 Gew.-% liegt.

7. Fettfüllung oder Aufstrich auf Fruchtbasis nach einem der vorangegangenen Ansprüche, **dadurch gekennzeichnet, dass** sie bzw. er außerdem mindestens ein Emulgiermittel, das in vorteilhafter Weise unter Lecithin, PGPR oder Ammoniumphosphatid ausgewählt ist, enthält.

8. Fettfüllung oder Aufstrich auf Fruchtbasis nach einem der vorangegangenen Ansprüche, **dadurch gekennzeichnet, dass** sie bzw. er mehr als 120 mg Calcium-Element/100 g Fettfüllung, in vorteilhafter Weise mehr als 400 mg pro 100 g Fettfüllung und vorzugsweise mehr als 1000 mg pro 100 g Fettfüllung enthält.

9. Fettfüllung oder Aufstrich auf Fruchtbasis nach einem der vorangegangenen Ansprüche, **dadurch gekennzeichnet, dass** ihr bzw. sein Gehalt an gesättigten Fettsäuren unter 50 Gew.-% bezogen auf das Gesamtgewicht der Fettsäuren liegt.

10. Fettfüllung oder Aufstrich auf Fruchtbasis nach einem der vorangegangenen Ansprüche, **dadurch gekennzeichnet, dass** sie bzw. er kein Färbemittel, das in den Europäischen Rechtsvorschriften als Zusatz bzw. Additiv angesehen wird, enthält.

11. Fettfüllung oder Aufstrich auf Fruchtbasis nach einem der vorangegangenen Ansprüche, **dadurch gekennzeichnet, dass** die Früchte des Pulvers von Früchten in einer lyophilisierten Form vorliegen.

12. Verfahren zur Herstellung einer Fettfüllung oder eines Aufstrichs auf Fruchtbasis nach einem der vorangegangenen Ansprüche, **dadurch gekennzeichnet, dass** 3 bis 20% von Pulver von Früchten, dessen D₉₀ unter 500 µm liegt und dessen Wassergehalt unter 8 Gew.-% liegt, zu der Fettfüllung oder dem Aufstrich, welche(r) Fett, ein Süßungsmittel, Milchpulver und/oder Pulver von Molkereierzeugnissen und/oder Stärke und gegebenenfalls trockenen, nicht fetten Kakao enthält, hinzu gegeben wird, wobei die Misch- und Aufbewahrungstemperatur 55°C während mehr als 30 min nicht übersteigt, in vorteilhafter Weise 45°C während mehr als 30 min nicht übersteigt.

13. Verfahren nach Anspruch 12, **dadurch gekennzeichnet, dass** die eingesetzten Früchte in einer lyophilisierten Form vorliegen.

14. Verwendung der Fettfüllung oder des Aufstrichs auf Fruchtbasis gemäß einem der Ansprüche 1 bis 11 als Füllung in Erzeugnissen der Keksherstellung, feinen Backwerken, Riegeln, bei Umgebungstemperatur aufbewahrten oder gekühlten Feingebäcken und Konfekt oder auf Brot, Brotersatzerzeugnissen oder beim Eintauchen bzw. Tränken von stäbchenartigen Kekserzeugnissen.
